(19) Europäisches Patentamt
European Patent Office
Office européen des brevets

(11) **EP 1 351 824 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(21) Anmeldenummer: **01989534.1**

(22) Anmeldetag: **28.11.2001**

(51) Int Cl.:
*B32B 27/40* (2006.01)    *B32B 5/18* (2006.01)
*B32B 18/00* (2006.01)    *B32B 9/00* (2006.01)
*C08G 18/66* (2006.01)

(86) Internationale Anmeldenummer:
**PCT/EP2001/013923**

(87) Internationale Veröffentlichungsnummer:
**WO 2002/045960 (13.06.2002 Gazette 2002/24)**

(54) **STEINVERBUNDPLATTEN**

COMPOSITE STONE PANELS

PANNEAUX COMPOSITES EN PIERRE

(84) Benannte Vertragsstaaten:
**AT BE CH CY DE DK ES FI FR GB GR IE IT LI LU MC NL PT SE TR**

(30) Priorität: **07.12.2000 DE 10060815**

(43) Veröffentlichungstag der Anmeldung:
**15.10.2003 Patentblatt 2003/42**

(73) Patentinhaber: **Henkel Kommanditgesellschaft auf Aktien**
**40589 Düsseldorf (DE)**

(72) Erfinder:
• THIELE, Lothar
  40764 Langenfeld (DE)
• GANSOW, Michael
  41516 Grevenbroich (DE)
• TE POEL, Andre
  47877 Willich (DE)

(56) Entgegenhaltungen:
WO-A-96/12759    DE-A- 19 918 459

**Beschreibung**

Die vorliegende Erfindung betrifft ein Verfahren zur Herstellung von Verbundkörpern aus mineralischen Formkörpern und geschäumten Polyurethanschichten sowie die nach diesem Verfahren hergestellten Verbundkörper.

Raumausstattungsgegenstände wie z. B. Küchenarbeits- oder Verkleidungsplatten, Fensterbänke, Fassaden-, Boden- oder Wandplatten, Duschtassen sowie Ausgüsse oder Spülen im Küchen- oder Badbereich bestehen häufig aus Natursteinplatten oder Natursteinformkörpern wie Marmor, Granit, Basalt oder Sandstein. Zur Erzielung einer ausreichenden Tragfähigkeit und Biegefestigkeit müssen diese mineralischen Formkörper oder Platten für die vorgenannten Einsatzzwecke erhebliche Schichtstärken haben. Daher sind derartige Raumausstattungsgegenstände oder auch plattenförmige Halbzeuge hierfür teuer und weisen ein sehr hohes Gewicht auf. Beides begrenzt die Einsetzbarkeit derartiger kompakter Natursteinprodukte.

Die DE-C-197 26 502 beschreibt ein Verfahren zur Herstellung von Platten oder Formteilen aus Polyisocyanaten und Polyolen, die zu einem Polyurethan-Schaumkunststoff reagieren, wobei unter Zumischung von Füllmitteln, Farbstoffen und dgl. ein Steinimitat entsteht. Es wird weiterhin vorgeschlagen, daß in einem inmold-Verfahren in einer geheizten Form das aufgeschäumte Polyurethangemisch mit einer Natursteinplatte, beispielsweise aus Granit oder Marmor oder aus Metall oder Holzwerkstoff verbunden wird. Dazu muß die Form beheizt werden, wobei eine Temperatur zwischen 55 und 80°C eingehalten werden muß und das Gemisch durch das Aufschäumen in der beheizten Form einem Druck zwischen 7 MPa und 14 MPa ausgesetzt werden muß, um eine Dichte zwischen 0,4 g/cm$^3$ und 2,0 g/cm$^3$ zu erreichen. Zu den Schaumstoffkomponenten wird nur ausgesagt, daß ein Polyisocyanat und ein Polyol eingesetzt werden, nähere Angaben sind dieser Schrift nicht zu entnehmen.

Die DE-A-19918459 beschreibt ein Verfahren zum Herstellen von Verbundkörpern aus mineralischen Formkörpern und geschäumten Polyurethanschichten. Hierzu wird vorgeschlagen, daß das Polyurethansystem aus Polyisocyanaten, Polyolen, Katalysatoren, Netz- und Dispergiermitteln, Schaumstabilisatoren, Wasser und / oder Carbonsäuren sowie vorzugsweise Füllstoffen bestehen soll. Bei diesem Verfahren muß die Form zur Herstellung des Verbundkörpers nicht vorgeheizt werden und die Zusammensetzung wird bei dem Schaumprozess nur dem beim Schaumprozess entstehenden Eigendruck ausgesetzt. Obwohl dieses Herstellverfahren recht brauchbare Ergebnisse liefert, hat es sich gezeigt, daß das Bindemittelsystem zur Entmischung neigt, so daß es nicht längere Zeit lagerfähig ist und unmittelbar vor Einsatz durch intensives Rühren sorgfältig homogenisiert werden muß.

WO 96/12759 A2 beschreibt ein Verfahren zur Herstellung von Polyurethanschäumen in der Gegenwart von Kohlenwasserstoff-Treibmitteln. Dieses Verfahren erlaubt die Herstellung von harten Kohlenwasserstoff-getriebenen Polyurethanschäumen durch Reaktion eines Polyisocyanates mit einer Polyurethanvormischung enthaltend ein Polyol und ein Kompatibilisierungsmittel: Dieses Kompatibilisierungsmittel soll dazu dienen, die Mischbarkeit des Kohlenwasserstofftreibmittels mit dem Polyol zu bewirken. Als Kompatibilisierungsmittel werden Fette, Öle, Monoglyceride, Diglyceride, Fettsäuren, Fettalkolole, Fettamide, Fettamine, Fettsäureester sowie Alkoxylierungsprodukte der vorgenannten Verbindungen oder alkoxylierte Alkylphenole oder deren Mischungen vorgeschlagen. Dieser Schrift ist nicht zu entnehmen, dass Entmischungserscheinungen der Polyolkomponenten untereinander, insbesondere bei wasserhaltigen Polyolmischungen auftreten können.

Angesichts dieses Standes der Technik haben sich die Erfinder die Aufgabe gestellt, ein möglichst einfaches und effizientes Verfahren zum Herstellen von Verbundkörpern aus mineralischen Formkörpern und geschäumten Polyurethanschichten bereitzustellen.

Diese Lösung der Aufgabe besteht im Wesentlichen darin, dass ein Verfahren zum Herstellen von Verbundkörpern aus mineralischen Formkörpern und geschäumten Polyurethanschichten bereitgestellt wird, bei dem

- eine Zusammensetzung, enthaltend Polyisocyanate, Polyole, langkettige Fettsäuren mit 6 bis 30 C-Atomen und Amine ausgewählt aus Ethylentriamin und dessen längerkettigen Homologen mit mindestens 2 Aminogruppen pro Molekül, hydroxyfunktionellen Polyaminen, Piperazien, aminoalkylsubstituierten Piperazinen, hydroxyalkylsubstituierten Piperazinen mit einen molaren Mischungsverhältnis von Fettsäure zu Amin(en) von 1:3 bis 3:1, Wasser sowie gegebenenfalls mineralische Füllstoffe in eine geschlossene Form eingebracht wird,
- wobei die Form nicht vorgeheizt wird und
- die Zusammensetzung nur dem Eigendruck ausgesetzt wird, der beim Schäumprozess des Polyurethangemisches entsteht und
- anschließend diese geschäumte Polyurethanschicht auf einen mineralischen Formkörper aufgeklebt wird.

Ein weiteres erfindungsgemäßes Verfahren zur Herstellung von Verbundkörpern aus mineralischen Formkörpern und geschäumten Polyurethanschichten ist dadurch gekennzeichnet, dass der Verbundkörper in einen Arbeitsgang hergestellt und geformt wird. Dabei sind die folgenden Verfahrensschritte wesentlich:

■ Einlegen des mineralischen Formkörpers in die Form,

■ Einbringen der Zusammensetzung, enthaltend Polyisocyanate, Polyole, langkettige Fettsäuren mit 6 bis 30 C-Atomen und Amine ausgewählt aus Diethylentriamin und dessen längerkettigen Homologen mit mindestens zwei Aminogruppen pro Molekül, hydroxyfunktionellen Polyaminen, Piperazin, aminoalkylsubstituierten Piperazinen, hydroxyalkylsubstituierten Piperazinen mit einem molaren Mischungsverhältnis von Fettsäuren zu Amin(en) von 1:3 bis 3:1, Wasser sowie ggf. mineralische Füllstoffe, in die Form,
■ Schließen der Form,
■ wobei die Form nicht vorgeheizt wird und
■ nur dem Eigendruck ausgesetzt wird, der beim Schäumprozeß des Polyurethangemisches entsteht.
■ Öffnen der Form und Entnahme des Verbundkörpers.

In einer weiteren Ausbildung des Verfahrens wird der geschäumte Polyurethankörper separat hergestellt und mit Hilfe eines Klebstoffes und gegebenenfalls einer Verstärkungsmatte auf dem mineralischen Formkörper oder Halbzeug aufgeklebt.

Das erfindungsgemäß einsetzbare Polyurethansystem besteht dabei aus mindestens einem der nachfolgenden Stoffe

a) Polyisocyanaten,
b) Polyolen,
c) Katalysatoren,
d) Carbonsäuren, die ggf. durch Wasser ergänzt werden können,
e) Aminen,
f) Schaumstabilisatoren,
g) Netz- und Dispergiermittel,
h) sowie vorzugsweise Füllstoffen.

Die im Rahmen des erfindungsgemäßen Verfahrens verwendeten Polyurethan-Bindemittel bestehen im wesentlichen aus einem Reaktionsprodukt mindestens eines Polyols mit mindestens einem Polyisocyanat, wobei zur Porenbildung des Schaums als Treibmittel gegebenenfalls Wasser und/oder eine Carbonsäure mitverwendet werden kann. Anstelle von Polyolen und Carbonsäuren können auch Hydroxycarbonsäuren oder Aminocarbonsäuren eingesetzt werden, Polyole können ganz oder teilweise durch Polyamine ersetzt werden.

Die Polyisocyanate sind mehrfunktionell, vorzugsweise enthalten die geeigneten mehrfunktionellen Isocyanate im Mittel 2 bis höchstens 5, vorzugsweise bis 4 und insbesondere 2 oder 3 Isocyanat-Gruppen pro Molekül. Die zu verwendenden Polyisocyanate können aromatische, cycloaliphatische oder aliphatische Isocyanate sein.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-diisocyanat, Diphenylmethan-4,4'-diisocyanat (MDI), Diphenylmethan-2,4'-diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyl-diphenylmethandiisocyanate, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat ($H_{12}$MDI), 1-Isocyanatomethyl-3-isocyanato-1,5,5-trimethylcyclohexan (Isophoron-Diisocyanat, IPDI), Cyclohexan-1,4-diisocyanat, hydriertes Xylylen-diisocyanat ($H_6$XDI), 1-Methyl-2,4-diisocyanato-cyclohexan, m- oder p-Tetramethylxylendiisocyanat (m-TMXDI, p-TMXDI) und Dimerfettsäure-diisocyanat. Beispiele für aliphatische Polyisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Butan-1,4-diisocyanat sowie 1,12-Dodecandiisocyanat ($C_{12}$DI).

Im allgemeinen werden aromatische Isocyanate bevorzugt, vorzugsweise das Diphenylmethandiisocyanat, entweder in Form der reinen Isomeren, als Isomerengemische der 2,4'-/4,4'-Isomeren oder auch das mit Carbodiimid verflüssigte MDI, das z.B. unter dem Handelsnamen Isonate 143 L bekannt ist, sowie das sogenannte "Roh-MDI", d.h. eine Isomeren/Oligomerenmischung des MDI, wie sie z.B. unter dem Handelsnamen PAPI bzw. Desmodur VK im Handel erhältlich sind. Weiterhin können sogenannte "quasi-Prepolymere", d.h. Umsetzungsprodukte des MDI bzw. des TDI mit niedermolekularen Diolen, wie z.B. Ethylenglykol, Diethylenglykol, Propylenglykol, Dipropylenglykol oder Triethylenglykol verwendet werden. Diese quasi Prepolymeren stellen bekanntlich eine Mischung der vorgenannten Umsetzungsprodukte mit monomeren Diisocyanaten dar. Erstaunlicherweise vermögen auch aliphatische und cycloaliphatische Isocyanate schon bei Raumtemperatur schnell und vollständig zu den erfindungsgemäßen Schaumstoffen zu reagieren. Neben den vorgenannten aliphatischen und cycloaliphatischen Isocyanaten sind auch deren Isocyanuratisierungsprodukte bzw. Biuretisierungsprodukte, insbesondere die des HDI bzw. IPDI einzusetzen.

Prinzipiell sind alle Polyole, die bereits zur Polyurethanherstellung bekannt sind, auch für die vorliegende Erfindung geeignet. In Betracht kommen insbesondere die an sich bekannten Polyhydroxy-Polyether des Molekulargewichtsbereiches von 60 bis 10.000, vorzugsweise 70 bis 6.000, mit 2 bis 10 Hydroxylgruppen pro Molekül. Derartige Polyhydroxypolyether werden in an sich bekannter Weise durch Alkoxylierung von geeigneten Startermolekülen erhalten, z. B. von Wasser, Propylenglykol, Glycerin, Trimethylolpropan, Sorbit, Rohrzucker usw. Geeignete Alkoxylierungsmittel sind insbesondere Propylenoxid und eventuell auch Ethylenoxid.

Vorzugsweise eignen sich die flüssigen Polyhydroxyverbindungen mit zwei bzw. drei Hydroxylgruppen pro Molekül, wie z.B. di- und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole, die z.B. durch die saure Polymerisation von Tetrahydrofuran hergestellt werden, dabei liegt der Molekulargewichtsbereich der Polytetramethylenglykole zwischen 200 und 6000, vorzugsweise im Bereich von 400 bis 4000.

Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Hexahydrophthalsäure oder Phthalsäure mit niedermolekularen Diolen bzw. Triolen wie z.B. Ethylenglykol, Propylenglykol, Diethylenglycol, Triethylenglycol, Dipropylenglycol, 1,4-Butandiol, 1,6-Hexandiol, 1,10-Decandiol, Glyzerin oder Trimethylolpropan hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonatpolyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Insbesondere ist die Polyol-Komponente eine Diol/Triol-Mischung aus Polyether- und Polyesterpolyolen.

Die erfindungsgemäß einzusetzenden Carbonsäuren reagieren mit den Isocyanaten in Gegenwart von Katalysatoren unter Abspaltung von Kohlendioxid zu Amiden, sie haben also die Doppelfunktion an dem Aufbau des Polymergerüstes beteiligt zu sein und gleichzeitig durch die Abspaltung des Kohlendioxids als Treibmittel zu wirken.

Unter "Carbonsäuren" werden Säuren verstanden, die eine oder mehrere - vorzugsweise bis zu drei - Carboxyl-Gruppen (-COOH) und mindestens 2, vorzugsweise 5 bis 400 C-Atome enthalten. Die Carboxyl-Gruppen können mit gesättigten oder ungesättigten, linearen oder verzweigten Alkyl- oder Cycloalkyl-Resten oder mit aromatischen Resten verbunden sein. Sie können weitere Gruppen wie Ether-, Ester-, Halogen-, Amid-, Amino-, Hydroxy- und Harnstoffgruppen enthalten. Bevorzugt werden jedoch Carbonsäuren, die als Flüssigkeiten bei Raumtemperatur leicht einarbeitbar sind, wie native Fettsäuren oder Fettsäuregemische, COOHterminierte Polyester, Polyether oder Polyamide, Dimerfettsäuren und Trimerfettsäuren. Konkrete Beispiele für die Carbonsäuren sind: Essigsäure, Valerian-, Capron-, Capryl-, Caprin-, Laurin-, Myristin-, Palmitin-, Stearin-, Isostearin-, Isopalmitin-, Arachin-, Behen-, Cerotin- und Melissin-Säuren sowie die ein- oder mehrfach ungesättigte Säuren Palmitolein-, Öl-, Elaidin-, Petroselin-, Eruca-, Linol-, Linolen- und Gadoleinsäure. Außerdem seien auch noch genannt: Adipinsäure, Sebacinsäure, Isophthalsäure, Terephthalsäure, Trimellitsäure, Phthalsäure, Hexahydrophthalsäure, Tetrachlorphthalsäure, Oxalsäure, Mukonsäure, Bernsteinsäure, Fumarsäure, Ricinolsäure, 12-Hydroxy-stearinsäure, Zitronensäure, Weinsäure, di- oder trimerisierte ungesättigte Fettsäuren, gegebenenfalls in Mischung mit monomeren ungesättigten Fettsäuren und gegebenenfalls Partialester dieser Verbindungen. Ebenso können auch Ester von Polycarbonsäuren oder Carbonsäuregemischen, die sowohl COOH- als auch OH-Gruppen besitzen, eingesetzt werden wie Ester von TMP [$C_2H_5$-$C(CH_2OH)_3$], Glycerin, Pentaerythrit, Sorbit, Glykol bzw. deren Alkoxylate mit Adipinsäure, Sebacinsäure, Zitronensäure, Weinsäure oder gepfropfte oder partiell veresterte Kohlenhydrate (Zucker, Stärke, Cellulose) und Ringöffnungsprodukte von Epoxiden mit Polycarbonsäuren.

Zu den "Carbonsäuren" zählen neben den Aminocarbonsäuren bevorzugt "Hydroxycarbonsäuren". Unter "Hydroxycarbonsäuren" sind Monohydroxymonocarbonsäuren, Monohydroxypolycarbonsäuren, Polyhydroxymonocarbonsäuren und Polyhydroxypolycarbonsäuren einschließlich der entsprechenden Hydroxyalkoxycarbonsäuren mit 2 bis 600, vorzugsweise mit 8 bis 400 und insbesondere mit 14 bis 120 C-Atomen zu verstehen, die 1 bis 9, vorzugsweise 2 bis 3, Hydroxylgruppen bzw. Carboxylgruppen an einem H-C-Rest, insbesondere an einem aliphatischen Rest enthalten. Die Polyhydroxymonocarbonsäuren und die Polyhydroxypolycarbonsäuren einschließlich der entsprechenden Hydroxyalkoxycarbonsäuren werden zu den Polyhydroxyfettsäuren zusammengefaßt. Die vorzugsweise verwendeten Dihydroxyfettsäuren sowie ihre Herstellung werden in der DE-OS 33 18 596 und der EP 237 959 beschrieben.

Die erfindungsgemäß verwendeten Polyhydroxyfettsäuren leiten sich bevorzugt von natürlich vorkommenden Fettsäuren ab. Sie weisen daher in der Regel eine gerade Anzahl an Kohlenstoffatomen in der Hauptkette auf und sind nicht verzweigt. Besonders geeignet sind solche mit einer Kettenlänge von 8 bis 100, insbesondere von 14 bis 22 C-Atomen. Für technische Verwendungen werden natürliche Fettsäuren meistens als technische Mischungen eingesetzt. Diese Mischungen enthalten vorzugsweise einen Teil an Ölsäure. Sie können darüber hinaus weitere gesättigte, einfach ungesättigte und mehrfach ungesättigte Fettsäuren enthalten. Auch bei der Herstellung der erfindungsgemäß verwendbaren Polyhydroxyfettsäuren bzw. Polyhydroxyalkoxyfettsäuren können prinzipiell Mischungen unterschiedlicher Kettenlänge eingesetzt werden, die auch noch gesättigte Anteile oder aber Polyhydroxyalkoxycarbonsäuren mit Doppelbindungen enthalten können. Geeignet sind hier also nicht nur die reinen Polyhydroxyfettsäuren, sondern auch Mischprodukte, erhalten aus tierischen Fetten oder pflanzlichen Ölen, die nach Aufbereitung (Esterspaltung, Reinigungsstufen) Gehalte an einfach ungesättigten Fettsäuren > 40 %, bevorzugt > 60 %, aufweisen. Beispiele hierfür sind käuflich erhältliche, natürliche Rohstoffe wie z.B. Rindertalg mit einer Kettenverteilung von 67 % Ölsäure, 2 % Stearinsäure, 1 % Heptadecansäure, 10 % gesättigte Säuren der Kettenlänge $C_{12}$ bis $C_{16}$, 12 % Linolsäure und 2 % gesättigte Säuren >$C_{18}$ Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Diese Produkte können nach Ringöffnung kurz destilliert werden, um die ungesättigten Fettsäureesteranteile zu reduzieren. Weiterführende Reinigungsschritte (z.B. länger anhaltende Destillation) sind ebenfalls möglich.

Bevorzugt leiten sich die erfindungsgemäß verwendeten Polyhydroxyfettsäuren von einfach ungesättigten Fettsäuren ab, z.B. von 4,5-Tetradecensäure, 9,10-Tetradecensäure, 9,10-Pentadecensäure, 9,10-Hexadecensäure, 9,10-Heptadecensäure, 6,7-Octadecensäure, 9,10-Octadecensäure, 11,12-Octadecensäure, 11,12-Eicosensäure, 11,12-Docosensäure, 13,14-Docosensäure, 15,16-Tetracosensäure und 9,10-Ximensäure. Davon bevorzugt ist die Ölsäure (9,10-Octadecensäure). Sowohl cis- als auch trans-Isomere von allen genannten Fettsäuren sind geeignet.

Geeignet sind auch Polyhydroxyfettsäuren, die sich von weniger häufig vorkommenden ungesättigten Fettsäuren herleiten, wie Decyl-12-ensäure, Stilingsäure, Dodecyl-9-ensäure, Rizinolsäure, Petroselinsäure, Vaccensäure, Eläostearinsäure, Punicinsäure, Licansäure, Parinarsäure, Gadoleinsäure, Arachidonsäure, 5-Eicosensäure, 5-Docosensäure, Cetoleinsäure, 5,13-Docosadiensäure und/oder Selacholeinsäure.

Des weiteren sind geeignet Polyhydroxyfettsäuren, die aus Isomerisierungsprodukten natürlicher ungesättigter Fettsäuren hergestellt worden sind. Die so hergestellten Polyhydroxyfettsäuren unterscheiden sich nur durch die Lage der Hydroxy- bzw. der Hydroxyalkoxygruppen im Molekül. Sie liegen im allgemeinen als Gemische vor. Natürlich vorkommende Fettsäuren sind im Sinne natürlicher Rohstoffe bei der vorliegenden Erfindung als Ausgangskomponente zwar bevorzugt, was aber nicht heißt, daß nicht auch synthetisch hergestellte Carbonsäuren mit entsprechenden C-Zahlen geeignet sind.

Ein Hydroxyalkoxyrest der Polyhydroxyfettsäuren leitet sich von dem Polyol ab, das zur Ringöffnung des epoxidierten Fettsäurederivats verwendet worden ist. Bevorzugt werden Polyhydroxyfettsäuren, deren Hydroxyalkoxygruppe sich von vorzugsweise primären difunktionellen Alkoholen mit bis zu 24, insbesondere bis zu 12 C-Atomen ableitet. Geeignete Diole sind Propandiol, Butandiol, Pentandiol und Hexandiol, Dodecandiol, vorzugsweise 1,2-Ethandiol, 1,4-Butandiol, 1,6-Hexandiol, Polypropylenglykol, Polybutandiol und/oder Polyethylenglykol mit einem Polymerisationsgrad von 2 bis 40. Des weiteren sind als Diol-Verbindungen Polypropylenglykol und/oder Polytetrahydrofurandiol sowie deren Mischpolymerisationsprodukte besonders geeignet. Dies gilt insbesondere dann, wenn diese Verbindungen jeweils einen Polymerisationsgrad von etwa 2 bis 20 Einheiten aufweisen. Zur Ringöffnung können aber auch Triole oder noch höherwertige Alkohole eingesetzt werden, z.B. Glycerin und Trimethylolpropan sowie deren Addukte von Ethylenoxid und/oder Propylenoxid mit Molekulargewichten bis zu 1 500. Es werden dann Polyhydroxyfettsäuren erhalten mit mehr als 2 Hydroxylgruppen pro Molekül.

Zur Ringöffnung kann anstelle eines Polyols als hydroxylgruppenhaltige Verbindung auch eine Hydroxycarbonsäure eingesetzt werden, z.B. Zitronensäure, Rizinolsäure, 12-Hydroxystearinsäure, Milchsäure. Es entstehen dann Ester-Gruppen anstelle von Ether-Gruppen. Des weiteren können auch Amine, Hydroxylgruppentragende Amine bzw. Amincarbonsäuren zur Ringöffnung eingesetzt werden.

Es können auch Dihydroxyfettsäuren, insbesondere aus Diolen, eingesetzt werden. Sie sind bei Raumtemperatur flüssig und lassen sich leicht mit den übrigen Reaktionsteilnehmern mischen. Unter Dihydroxyfettsäuren werden im Sinne der Erfindung sowohl die Ringöffnungsprodukte epoxidierter ungesättigter Fettsäuren mit Wasser als auch die entsprechenden Ringöffnungsprodukte mit Diolen und deren Vernetzungsprodukten mit weiteren Epoxidmolekülen verstanden. Die Ringöffnungsprodukte mit Diolen können etwas genauer auch als Dihydroxyalkoxyfettsäuren bezeichnet werden. Dabei sind vorzugsweise die Hydroxygruppen bzw. die Hydroxyalkoxygruppe durch mindestens 1, vorzugsweise mindestens 3, insbesondere mindestens 6, $CH_2$-Einheiten von der Carboxygruppe getrennt. Bevorzugte Dihydroxyfettsäuren sind: 9,10-Dihydroxypalmitinsäure, 9,10-Dihydroxystearinsäure und 13,14-Dihydroxybehensäure sowie deren 10,9- bzw. 14,13-Isomere.

Auch mehrfach ungesättigte Fettsäuren sind geeignet, z.B. Linolsäure, Linolensäure und Ricinensäure. Als konkretes Beispiel für eine aromatische Carbonsäure sei die Zimtsäure genannt.

Um die Entmischung der eingesetzten Polyolkomponenten, insbesondere bei Verwendung von hydroxyfunktionellen nativen Ölen zu vermeiden, ist es notwendig, Aminoverbindungen in einem festem molaren Mischungsverhältnis mit den lösungsvermittelnden Carbonsäuren einzusetzen. Eine derartige Mischung bewirkt eine Lösungsvermittlung zwischen den Polyalkoholen und Wasser, ohne daß die Schaumstoffeigenschaften nachweisbar negativ beeinflusst werden. Als Amine eigenen sich eine Vielzahl von Di- und Polyaminen, insbesondere heterocyclische Amine. Durch diese Mischung aus den lösungsvermittelnden Carbonsäuren und Aminen sind die erfindungsgemäßen Zusammensetzungen ohne erneutes Aufrühren unmittelbar vor der Anwendung verarbeitbar.

Als lösungsvermittelnde Carbonsäuren eignen sich unverzweigte und verzweigte aliphatische gesättigte und ungesättigte Carbonsäuren mit 6 bis 30, insbesondere 6 bis 24 C-Atomen, konkret genannt seien die Fettsäuren aus dem Rapsöl (Ölsäure, Linolsäure, Linolensäure, Erucasäure: "Rapsfettsäure"), sowie Isostearinsäure. Als Amine eignen sich Diethylentriamin und dessen längerkettige Homologe mit mindestens zwei Aminogruppen pro Molekül, es können auch hydroxyfunktionelle Polyamine wie z.B. N-(2-Aminoethyl)ethanolamin verwendet werden. Insbesondere eignen sich auch Piperazin und aminoalkyl- bzw. hydroxyalkylsubstituierte Piperazine, konkret genannt sei hier Aminoethylpiperazin. Das Mischungsverhältnis der vorgenannten Amine zu den lösungsvermittelnden Carbonsäuren soll dabei 1:3 bis 3:1 betragen.

Die Treib-Reaktion, d. h. die $CO_2$-Bildung für die Aufschäumung, kann sowohl durch die Reaktion von Isocyanatgruppen, des Polyiocyanats mit den Carbonsäuregruppen der Carbonsäuren als auch ggf. ergänzend durch die Reaktion der Isocyanatgruppen mit Wasser erfolgen.

Der Wassergehalt der Polyolkomponente kann zwischen 0 und 10 Gew. % liegen, vorzugsweise liegt er zwischen 0,3 und 5 Gew. %.

Wenn die $CO_2$-Abspaltung aus der Isocyanat-Carbonsäure-Reaktion bereits bei Raumtemperatur starten soll, ist es zweckmäßig, Amino-substituierte Pyridine und/oder N-substituierte Imidazole als Katalysatoren zu verwenden. Besonders geeignet sind 1-Methylimidiazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholino-pyridin, 4-Methylpyridin und N-Dodecyl-2-Methyl-imidazol.

Die oben genannten Ausgangsstoffe für das PU-Bindemittel, nämlich Polyisocyanat, Polyol, Polyamin, Wasser, Carbonsäure und Katalysator werden in folgenden Mengenverhältnissen eingesetzt: Auf ein Äquivalent Isocyanat kommen 0,1 bis 1, vorzugsweise 0,8 bis 1 Äquivalente einer Mischung aus Polyol, Polyamin, Wasser und/oder Carbonsäure, wobei das Verhältnis Polyol und/oder Polyamin zu Wasser und/oder Carbonsäure 20 :1 bis 1 : 20 betragen kann. Die Menge an einzusetzenden Katalysatoren liegt zwischen 0,0001 und 1,0, vorzugsweise zwischen 0,01 und 0,5 äquivalenten Pyridin- oder Imidazolkatalysator. Wird dagegen nur Wasser zur Treibreaktion eingesetzt, kann auf die Zugabe der oben angegebenen Pyridine und Imidazole verzichtet werden. Ist jedoch Carbonsäure das alleinige Treibmittel, müssen diese Pyridine und/oder Imidazole in Kombination mit den später aufgeführten basischen oder metallorganischen Katalysatoren zur Reaktionsbeschleunigung eingesetzt werden. Setzt man Polycarbonsäuren oder Hydroxy- bzw. Aminocarbonsäuren ein, kann auf den Zusatz eines Polyols oder Polyamins ganz verzichtet werden. Für den Fall, daß kein Polyol, Polyamin oder Wasser an der Reaktion beteiligt ist, also die Isocyanate mit den Carbonsäuren umgesetzt werden, gilt die Regel: Auf ein Äquivalent Isocyanat kommen 0,1 bis 1, vorzugsweise 0,8 bis 1 äquivalente Carbonsäure und 0,0001 bis 1,0, vorzugsweise 0,001 bis 0,5 äquivalente Pyridin- oder Imidazolkatalysator.

Für den Fall, daß die mehrwertigen Isocyanate überwiegend mit Hydroxycarbonsäuren umgesetzt werden, sollen die o.g. Amin-Katalysatoren vorzugsweise in einer Konzentration von 0,05 bis 15, insbesondere von 0,5 bis 10 Gew.-% eingesetzt werden, bezogen auf die Summe von Hydroxycarbonsäure und Isocyanat.

Neben den obengenannten Pyridin- und Imidazol-Derivaten können noch weitere Katalysatoren zugesetzt werden. Insbesondere für die Isocyanat/Polyol- und Isocyanat/Wasser-Reaktion können metallorganische Verbindungen wie Zinn(II)salze von Carbonsäuren, starke Basen wie Alkali-Hydroxide, -Alkoholate und -Phenolate, z.B. Zinn-II-acetat, -ethylhexoat und -diethylhexoat verwendet werden. Eine bevorzugte Verbindungsklasse stellen die Dialkyl-Zinn(IV)-Carbokylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie insbesondere 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonyl-ethyl)zinndilaurat und Bis(β-acetyl-ethyl)zinndilaurat.

Auch Zinnoxide und -sulfide sowie -thiolate sind bevorzugt brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinntris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2-ethylhexoat) mit der allgemeinen Formel $R_{n+1}Sn(SCH_2CH_2OCOC_8H_{17})_{3-n}$, wobei R eine Alkylgruppe mit 4 bis 8 C-Atomen ist, Bis(β-methoxycarbonylethyl)zinn-bis(thioethylenglykol-2-ethylhexoat), Bis(β-methoxycarbonylethyl)-zinn-bis(thioglykolsäure-2-ethylhexoat), und Bis(β-acetyl-ethyl)zinn-bis(thioethylenglykol-2-ethylhexoat) und Bis(β-acetyl-ethyl)zinn-bis(thioglykolsäure-2-ethylhexoat.

Für die Vernetzung des Polyurethangerüstes kann auch die Trimerisierungsreaktion der Isocyanatgruppen mit sich selbst bzw. mit Urethan und Harnstoffgruppen zu Allophanat- bzw. Biuret-Gruppen erfolgen. Hierzu können Trimerisierungskatalysatoren verwendet werden. Als Trimerisierungs-Katalysator sei DABCO TMR-2 usw. der Fa. Air Products genannt, wobei es sich um in Ethylenglykol gelöste quaternäre Ammoniumsalze handelt.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Konkret genannt seien:

Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanolhexylamin, Diethanolcyclohexylamin, Diethanolphenylamin sowie deren Ethoxylierungs- und Propoxylierungs-Produkte, Diazabicyclo-octan(Dabco), Triethylamin, Dimethylbenzylamin (Desmorapid DB, BAYER), Bis-dimethylaminoethylether (Calalyst A I, UCC), Tetramethylguanidin, Bis-dimethylaminomethyl-phenol, 2,2' -Dimorpholinodiethylether, 2-(2-Dimethylaminoethoxy)ethanol, 2-Dimethylaminoethyl-3-dimethylaminopropylether, Bis(2-dimethylaminoethyl) ether, N,N-Dimethylpiperazin, N-(2-hydroxyethoxyethyl)-2-azanorborane, Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin.

Die Katalysatoren können auch in oligomerisierter oder polymerisierter Form vorliegen, z.B. als N-methyliertes Polyethylenimin.

Die Polyurethan-Bindemittel der erfindungsgemäß hergestellten Formkörper haben neben den Amidgruppen aufgrund der Carbonsäure/Isocyanat-Reaktion noch Urethan-Gruppen aus der Reaktion der Isocyanate mit den Polyolen und/oder Polyhydroxycarbonsäuren. Außerdem enthalten sie Harnstoff-Gruppen aus der Reaktion der Isocyanate mit dem gegebenenfalls vorhandenen Wasser, den Polyaminen oder Aminocarbonsäuren des Systems. Sie enthalten außerdem noch Ester-Gruppen bzw. Ether-Gruppen aus den eingesetzten Polyolen.

Die Menge der Reaktionspartner Polyisocyanat, Polyol, Polyamin, Carbonsäure und Wasser wird so gewählt, daß das Polyisocyanat im Überschuß eingesetzt wird. Das Äquivalentverhältnis von NCO- zur Summe aus OH-, NH- und COOH-Gruppen beträgt 5:1, vorzugsweise 2:1 bis 1,2:1, ganz besonders bevorzugt ist ein Isocyanat-Überschuß von 5 bis 50 %.

In einer bevorzugten Ausführungsform enthält die Zusammensetzung zur Herstellung der geschäumten Polyurethanschicht neben den vorgenannten Bindemittelbestandteilen einen hohen Anteil an Füllstoff. Als Füllstoff können dabei neben den in der Polyurethanchemie üblichen Füllstoffen wie Calciumcarbonat in Form der gefällten oder der gemahlenen Kreiden oder als Kalksteinmehl auch Dolomit $(CaMg(CO_3)_2)$, Bariumsulfat (Schwerspat), Aluminiumoxid, Aluminiumoxidhydrat, auch Quarzsand, getrockneter Steinschleifschlamm, Holzspäne, Zellulosefasern, Schaumstoffabfälle, Gummimehl, Gummischnitzel, Schaumglasgranulat oder gemahlenes Glas eingesetzt werden. Der Füllstoffanteil kann dabei bis zu 80 Gew.% des Polyurethanbindemittels ausmachen. Bei hohen Wassergehalten der Füllstoffe kann es notwendig sein, diese in an sich bekannter Weise zu trocknen. Gegebenenfalls kann diese Füllstoffmischung mit geeignet gefärbten Steinschleifschlämmen eingefärbt werden, hierzu können schwarz-, rot- oder grau-gefärbte Quarzmehle oder Steinschleifschlämme eingesetzt werden. Gegebenenfalls können die Füllstoffe mit Haftvermittlern, insbesondere organofunktionellen Silanen oder Titanaten vor dem Zumischen oberflächenbehandelt werden, so daß sie besser eindispergiert werden und besser in die Polyurethanmatrix eingebunden werden.

Als mineralische Formkörper eignen sich Platten oder vorgeformte Halbzeuge aus den Ergußgesteinen Granit, Basalt, Sylenit, Diabas, Tuff, Liparit, Diorit, Andesit, Pikrit sowie Sandstein als Beispiel für ein Sedimentgestein oder Marmor als Beispiel für metamorphe Gesteine. Neben den vorgenannten mineralischen Formkörpern aus natürlichen Gesteinen können auch synthetische Steine auf Beton- bzw. Kunstharzbasis (Polyester) Verwendung finden. Die Dicke der verwendeten Steinplatte oder des Halbzeugs richtet sich dabei nach dem Einsatzzweck sowie der zu erwartenden Belastung, sie hat üblicherweise eine Dicke zwischen 8 und 20 mm, vorzugsweise zwischen 10 und 14 mm.

Um eine gute Haftung zwischen der Steinplatte und dem Schaumstoff zu erreichen, kann vor Einbringen des (füllstoffhaltigen) Schaumstoff-Reaktionsgemisches in die Form auf die Steinplatte ein Klebstoff aufgetragen werden. Dieser Klebstoff kann dabei jeder an sich bekannte Strukturklebstoff auf Basis von Polyurethanen oder Epoxiden sein, bevorzugt wird hierbei ein Polyurethanklebstoff, der im wesentlichen die Bestandteile des vorgenannten Bindemittelsystems enthält, wobei keine Treibmittel in der Klebstoff-Formulierung enthalten sind.

Zwischen Steinplatte und Polyurethanschaumstoff sowie auf der Rückseite der Polyurethanschaumstoffschicht (d. h. der der Steinplatte abgewandten Seite) kann eine Verstärkungsmatte bzw. ein Verstärkungsvlies eingebracht werden, um die Stabilität der Verbundplatte zu erhöhen. Diese Verstärkungsmatte kann dabei aus Glasfasergewebe, Glasfaservlies oder aus synthetischen oder natürlichen Fasermaterialien bestehen.

Ein besonders bevorzugter Füllstoff ist dabei Quarzsand, wobei dieser zum verbesserten Fließverhalten des Polyurethanreaktionsgemisches vor dem Aushärten eine definierte Korngrößenverteilung haben soll. Besonders bevorzugt sind dabei Füllstoffe mit einer Fullerverteilung, bei der die Körnungsmischung der folgenden mathematischen Formel

$$\sqrt{\phantom{d/d_{max}}}\ d/d_{max} *100$$

folgt, wobei d die Maschenweite des Prüfsiebes in mm, $d_{max}$ der Durchmesser des Maximalkornes in mm und D der Siebdurchgang des Füllstoffes durch das Prüfsieb in % ist. Ein derartiges Korngemisch bewirkt bekanntlich theoretisch eine vollständige Raumerfüllung, d. h. einen Füllgrad von 100 %. Hierdurch ergibt sich ein optimales Fließverhalten sowie eine optimale Einbindung des Füllstoffes in die polymere Schaumstoffmatrix. Voraussetzungen für eine derartige theoretisch vollständige Raumerfüllung sind jedoch

- Verfügbarkeit aller Füllstoffe zwischen der Maschenweite 0 und der Maschenweite $d_{max}$ im errechneten Anteil und
- eine vollständige Mischgüte.

Beide Forderungen sind in der Praxis meist nicht zu erfüllen, daher verwendet man meistens Füllstoffzusammensetzungen, die eine "Ausfallkörnung" aufweisen. Diese Bezeichnung kommt daher, daß bei diesem Mischungstyp zwischen dem Grobkornbereich und dem Feinkornbereich eine Mischungslücke besteht. Derartige Füllstoffe mit Ausfallkörnungen sind ebenfalls bevorzugte Füllstoffgemische für die erfindungsgemäßen Verbundkörper. Ganz besonders bevorzugt sind dabei Quarzsandsorten wie sie unter der Bezeichnung F31, F32, F34, F36 von den Quarzwerken Frechen angeboten werden. Diese haben eine mittlere Korngröße von 0,33; 0,24; 0,20 bzw. 0,16 mm. Diese können dann gegebenenfalls mit feinkörnigen Quarzmehlen wie Millisil W12 (mittlere Korngröße 16 $\mu$m) oder Sikron SF (Quarzmehl, mittlere Korngröße 10 $\mu$m) abgemischt werden.

Zur besseren Einarbeitung der Füllstoffe enthalten die erfindungsgemäßen Zusammensetzungen in der Regel Netz- und Dispergiermittel. Diese verbessern das Einarbeiten der Füllstoffe sowie das Fließen der Polyurethanschaumstoff-Reaktionsgemische mit dem Quarzsand dem Steinschleifschlamm oder dem gemalenen Glas in die Randbereiche der auszugießenden Formen. Konkrete Beispiele für derartige Netz- und Dispergiermittel werden von der Firma Byk unter den Bezeichnungen BYK W 968, W 910, A 525 oder A 530 angeboten.

Es kann zweckmäßig sein, an sich bekannte Schaumstabilisatoren einzusetzen, z.B. auf der Basis von Siloxan-Oxyalkylencopolymerisaten wie sie z.B. unter dem Handelsnamen Tegostab von der Firma Goldschmidt vertrieben werden. Prinzipiell können aber auch andere, silikonfreie Stabilisatoren verwendet werden z.B. LK-221, LK-223 und LK-443 der Firma AirProducts oder auch Betainemulgatoren.

Falls einzelne Komponenten des Bindemittelsystems höhere Wassergehalte aufweisen, kann es sinnvoll sein, Trockenmittel in der Form von Molekularsieb-Pasten zu verwenden. Bei sehr hohen oder schwankenden Wassergehalten müssen diese Bestandteile ggf. vorher getrocknet werden.

Zum erleichterten Entformen der Formkörper nach deren Herstellung können an sich bekannte Trennmittel in der Metallform eingesetzt werden, beispielsweise Acmos-Trennmittel für PUR mit den Typenbezeichnungen 39-5001, 39-4487, 37-3200 und 36-3182. In vielen Fällen kann es jedoch auch genügen, die Metallform mit einer Schicht an fluorierten Polymeren als Trennmittel zu versehen (Teflon®-Schicht).

Die nach dem erfindungsgemäßen Verfahren hergestellten Verbundkörper aus mineralischen Formkörpern und geschäumten Polyurethanschichten eignen sich wie eingangs erwähnt für eine Vielzahl von Raumausstattungsgegenständen. Konkret genannt seinen hier Tischplatten, Arbeitsplatten für Küchenmöbel, Fußbodenplatten für Gebäude - ggf. mit entsprechender Formgebung in der Schaumstoffschicht für Fußbodenheizungsrohre - , Terassenplatten, Fensterbänke, Platten für die Verkleidung von Gebäuden - ggf. unter Einbindung von Befestigungselementen oder Gehwegplatten.

Die Erfindung wird im folgenden durch Ausführungsbeispiele näher erläutert.

**Beispiel 1 (Vergleichsbeispiel)**

| a) Polyolkomponente | Massenanteile in % |
|---|---|
| Rizinusöl | 61,8 |
| Glycerin | 7,0 |
| Polypropylenglykol, Mn 400 | 24,3 |
| Dipropylenglycol | 3,0 |
| Wasser | 2,2 |
| 1,4-Diazabicyclo[2.2.2]octan | 0,5 |

(fortgesetzt)

| a) Polyolkomponente | Massenanteile in % |
|---|---|
| Tegostab B 8404 | 1,2 |
| **b) Isocyanatkomponente** | |
| Diphenylmethan-4,4'-diisocyanat (Roh-MDI) | 110 |

Die Bestanteile der Polyolkomponente wurden mit einem Laborrührer vermischt. Dabei entstand eine trübe Flüssigkeit. Diese trennte sich nach Beenden des Mischvorgangs langsam in 2 Phasen.

Vor Reaktion mit der Isocyanatkomponente wurde die Polyolkomponente aufgerührt, um einen Schaumstoff mit homogenen Eigenschaften zu erhalten.

Die Polyolkomponente und Quarzsand F31 (Quarzwerke Frechen) wurden im Mischungsverhältnis 100:185 vermischt. Diesem Gemisch wird das Isocyanat zugesetzt, und es wurde erneut homogenisiert. Das Verhältnis Polyolkomponente zu Isocyanat lag bei 100:110. Dieses Gemisch wurde in eine mit Trennmittel imprägnierte Metallform gegeben, die mit einem Deckel verschließbar war. Auf dem Boden dieser Form befand sich eine 1 cm dicke Granitplatte. Nach dem Einbringen des Reaktionsgemisches wurde dies in der Form gleichmäßig verteilt und ein Glasfasergewebe aufgelegt. Nach 30 bis 45 min konnte eine Steinverbundplatte aus der hierzu geöffneten Form entnommen werden.

### Beispiel 2 (erfindungsgemäß)

| a) Polyolkomponente | Masseanteile in % |
|---|---|
| Dipropylenglykol | 22,00 |
| Glyzerin | 7,00 |
| Polypropylenglykol, Mn 400 | 54,72 |
| Rapsfettsäure | 10,00 |
| Wasser | 1,30 |
| Tegostab B 8404 | 1,00 |
| N-Methylimidazol | 0,40 |
| Dibutylzinndilaurat | 0,08 |
| Aminoethylpiperazin | 3,5 |
| **Isocyanatkomponente** | |
| Diphenylmethan-4,4'-diisocyanat (Roh-MDI) | 150 |

Die homogen gebliebene Polyolkomponente und Quarzsand F31 (Quarzwerke Frechen) wurden im Mischungsverhältnis 100:185 vermischt. Diesem Gemisch wird das Isocyanat zugesetzt, und es wurde erneut homogenisiert. Das Verhältnis Polyolkomponente zu Isocyanat lag bei 100:150. Dieses Gemisch wurde in eine mit Trennmittel imprägnierte Metallform gegeben, die mit einem Deckel verschließbar war. Auf dem Boden dieser Form befand sich eine 1 cm dicke Granitplatte. Nach dem Einbringen des Reaktionsgemisches wurde dies in der Form gleichmäßig verteilt und ein Glasfasergewebe aufgelegt. Nach 30 bis 45 min konnte eine Steinverbundplatte aus der hierzu geöffneten Form entnommen werden.

**Patentansprüche**

1. Verfahren zum Herstellen von Verbundkörpern aus mineralischen Formkörpern und geschäumten Polyurethanschichten, **dadurch gekennzeichnet, daß**

• eine Zusammensetzung, enthaltend

Polyisocyanate, Polyole,
langkettige Fettsäuren mit 6 bis 30 C-Atomen und Amine ausgewählt aus Diethylentriamin und dessen längerkettigen Homologen mit mindestens zwei Aminogruppen pro Molekül, hydroxyfunktionellen Polyaminen, Piperazin, aminoalkylsubstituierten Piperazinen, hydroxyalkylsubstituierten Piperazinen mit einem molaren Mischungsverhältnis von Fettsäuren zu Amin(en) von 1:3 bis 3:1,
Wasser sowie
ggf. mineralische Füllstoffe,

in eine geschlossene Form eingebracht wird,
• wobei die Form nicht vorgeheizt wird und
• nur dem Eigendruck ausgesetzt wird, der beim Schäumprozeß des Polyurethangemisches entsteht und
• anschließend diese geschäumte Polyurethanschicht auf einen mineralischen Formkörper aufgeklebt wird.

2. Verfahren nach Anspruch 1, **dadurch gekennzeichnet, daß** zum Verkleben des mineralischen Formkörpers mit der geschäumten Polyurethanschicht ein Polyurethan-Klebstoff verwendet wird, der im wesentlichen die Bestandteile des Bindemittelsystems gemäß Anspruch 1 enthält, wobei keine Treibmittel in der Klebstoff-Formulierung enthalten sind.

3. Verfahren nach Anspruch 2, **dadurch gekennzeichnet, daß** vor dem Aufbringen der Schaumzusammensetzung auf die Klebstoffschicht eine Verstärkungsmatte oder ein Verstärkungsvlies aufgebracht wird.

4. Verfahren zum Herstellen von Verbundkörpern aus mineralischen Formkörpern und geschäumten Polyurethanschichten, **dadurch gekennzeichnet, daß** der Verbundkörper in einem Arbeitsgang hergestellt und geformt wird **gekennzeichnet durch** die folgenden wesentlichen Verfahrenschritte

■ Einlegen des mineralischen Formkörpers in die Form
■ Einbringen der Zusammensetzung enthaltend

Polyisocyanate, Polyole,
langkettige Fettsäuren mit 6 bis 30 C-Atomen und Amine ausgewählt aus Diethylentriamin und dessen längerkettigen Homologen mit mindestens zwei Aminogruppen pro Molekül, hydroxyfunktionellen Polyaminen, Piperazin, aminoalkylsubstituierten Piperazinen, hydroxyalkylsubstituierten Piperazinen mit einem molaren Mischungsverhältnis von Fettsäuren zu Amin(en) von 1:3 bis 3:1,
Wasser sowie
ggf. mineralische Füllstoffe,

in die Form,
■ Schließen der Form,
■ wobei die Form nicht vorgeheizt wird und
■ nur dem Eigendruck ausgesetzt wird, der beim Schäumprozeß des Polyurethangemisches entsteht,
■ Öffnen der Form und Entnahme des Verbundkörpers.

5. Verfahren nach Anspruch 4, **dadurch gekennzeichnet, daß** auf den mineralischen Formkörper vor Einbringen der schaumfähigen Polyurethan-Zusammensetzung eine Klebstoffschicht aufgebracht wird.

6. Verfahren nach Anspruch 4 oder 5, **dadurch gekennzeichnet, daß** vor dem Aufbringen der Schaumzusammensetzung auf die Klebstoffschicht eine Verstärkungsmatte oder ein Verstärkungsvlies aufgebracht wird.

7. Verfahren nach mindestens einem der vorhergehenden Ansprüche, **dadurch gekennzeichnet, daß** die der mineralischen Schicht abgewandte Seite des Schaumkörpers mit einer Verstärkungsmatte oder einem Verstärkungsvlies versehen wird.

8. Verfahren nach mindestens einem der vorhergehenden Ansprüche, **dadurch gekennzeichnet, daß** als Schaumstoff-Zusammensetzung ein gefülltes Polyurethan-Bindemittel verwendet wird, wobei die Füllstoffe ausgewählt werden aus Calciumcarbonat in Form von Kreiden oder Kalksteinmehl, Calciummagnesiumcarbonat, Bariumsulfat, Aluminiumoxid, Aluminiumoxidhydrat, Quarzsand, getrocknetem Steinschleifschlamm, gemahlenem Glas, Schaumglasgranulat, Holzspäne, Holzmehl, Cellulosefasern, Schaumstoffabfällen, Gummimehl oder Gummischnitzeln oder Mischungen davon.

**9.** Verfahren nach mindestens einem der vorhergehenden Ansprüche, **dadurch gekennzeichnet, daß** das Polyurethan-Bindemittel aus Polyisocyanaten, Polyolen, Katalysatoren, Carbonsäuren, 0 bis 5 Gew.% Wasser (bezogen auf das Bindemittel), Aminen, Schaumstabilisatoren sowie Netz- und Dispergiermitteln besteht.

**10.** Verfahren nach mindestens einem der vorhergehenden Ansprüche, **dadurch gekennzeichnet, daß** die Teilchengrößenverteilung der Füllstoffe einer Fullerverteilung oder einer Ausfallkörnung entspricht.

**11.** Verbundformkörper hergestellt nach' einem Verfahren gemäß Anspruch 1 bis 10.

**12.** Verwendung der Verbundkörper gemäß Anspruch 11 als Tischplatten, Arbeitsplatten für Küchenmöbel, Fußbodenplatten für Gebäude (ggf. mit Formgebung in der Schaumstoffschicht für Fußbodenheizungsrohre), Terassenplatten, Fensterbänke, Platten für die Verkleidung von Gebäuden oder Gehwegplatten.

**Claims**

**1.** Process for the production of composite bodies comprising mineral mouldings and foamed polyurethane layers, **characterized in that**

• a composition containing

polyisocyanates, polyols,
long-chain fatty acids having 6 to 30 C atoms and amines selected from diethylenetriamine and longer-chain homologues thereof having at least two amino groups per molecule, hydroxyfunctional polyamines, piperazine, aminoalkyl-substituted piperazines, hydroxyalkyl-substituted piperazines having a molar mixing ratio of fatty acids to amine(s) of 1:3 to 3:1,
water and
optionally mineral fillers,

is introduced into a closed mould,
• the mould not being preheated and
• being exposed only to the autogenous pressure which results during the foaming process of the polyurethane mixture and
• this foamed polyurethane layer then being adhesively bonded on a mineral moulding.

**2.** Process according to Claim 1, **characterized in that** a polyurethane adhesive which substantially contains the constituents of the binder system according to Claim 1, no blowing agents being present in the adhesive formulation, is used for the adhesive bonding of the mineral moulding to the foamed polyurethane layer.

**3.** Process according to Claim 2, **characterized in that** a reinforcing mat or a reinforcing nonwoven is applied before the application of the foam composition to the adhesive layer.

**4.** Process for the production of composite bodies comprising mineral mouldings and foamed polyurethane layers, **characterized in that** the composite body is produced and moulded in one operation **characterized by** the following substantial process steps

• insertion of the mineral moulding into the mould
• introduction of the composition containing polyisocyanates, polyols, long-chain fatty acids having 6 to 30 C atoms and amines selected from diethylenetriamine and longer-chain homologues thereof having at least two amino groups per molecule, hydroxyfunctional polyamines, piperazine, aminoalkyl-substituted piperazines, hydroxyalkyl-substituted piperazines having a molar mixing ratio of fatty acids to amine(s) of 1:3 to 3:1,

water and
optionally mineral fillers

into the mould,
• closing of the mould,
• the mould not being preheated and

• being exposed only to the autogenous pressure which results during the foaming process of the polyurethane mixture,
• opening of the mould and removal of the composite body.

5. Process according to Claim 4, **characterized in that** an adhesive layer is applied to the mineral moulding before introduction of the foamable polyurethane composition.

6. Process according to Claim 4 or 5, **characterized in that** a reinforcing mat or a reinforcing nonwoven is applied before application of the foam composition to the adhesive layer.

7. Process according to at least one of the preceding claims, **characterized in that** that side of the foam body which faces away from the mineral layer is provided with a reinforcing mat or a reinforcing nonwoven.

8. Process according to at least one of the preceding claims, **characterized in that** a filled polyurethane binder is used as the foam composition, the fillers being selected from calcium carbonate in the form of chalks or limestone powder, calcium magnesium carbonate, barium sulphate, alumina, hydrated alumina, quartz sand, dried stonegrinding slurry, ground glass, foamed glass granules, woodchips, wood flour, cellulose fibres, foam wastes, rubber powder, rubber chips or mixtures thereof.

9. Process according to at least one of the preceding claims, **characterized in that** the polyurethane binder consists of polyisocyanates, polyols, catalysts, carboxylic acids, 0 to 5% by weight of water (based on the binder), amines, foam stabilizers and wetting agents and dispersants.

10. Process according to at least one of the preceding claims, **characterized in that** the particle size distribution of the fillers corresponds to a filler distribution or an omitted-size grain mix.

11. Composite moulding produced by a process according to Claims 1 to 10.

12. Use of the composite bodies according to Claim 11 as tabletops, worktops for kitchen furniture, floor panels for buildings (optionally with shaping in the foam layer for floor heating pipes), terrace slabs, windowsills, panels for the cladding of buildings or path paving slabs.

**Revendications**

1. Procédé pour la réalisation de corps composites à partir de corps façonnés minéraux et de couches moussées en polyuréthane, **caractérisé**

• **en ce qu'**on introduit une composition, contenant

des polyisocyanates, des polyols,
des acides gras à longue chaîne comprenant 6 à 30 atomes de carbone et des amines, choisies parmi la diéthylènetriamine et ses homologues à plus longue chaîne, comprenant au moins deux groupes amino par molécule, les polyamines à fonctionnalité hydroxy, la pipérazine, les pipérazines substituées par aminoalkyle, les pipérazines substituées par hydroxyalkyle, avec un rapport de mélange molaire d'acides gras à amine(s) de 1:3 à 3:1,
de l'eau ainsi que
le cas échéant des charges minérales,
dans un moule fermé,

• le moule n'étant pas préchauffé et
• n'étant soumis qu'à la pression propre qui se forme lors du processus de moussage du mélange de polyuréthane et
• **en ce qu'**on colle ensuite cette couche moussée de polyuréthane sur un corps façonné minéral.

2. Procédé selon la revendication 1, **caractérisé en ce qu'**on utilise pour le collage du corps façonné minéral avec une couche moussée de polyuréthane un adhésif à base de polyuréthane qui contient essentiellement les constituants du système d'agent liant selon la revendication 1, la formulation d'adhésif ne contenant pas d'agents gonflants.

**3.** Procédé selon la revendication 2, **caractérisé en ce qu'**on applique, avant l'application de la composition de mousse sur la couche d'adhésif, une natte de renforcement ou un non-tissé de renforcement.

**4.** Procédé pour la réalisation de corps composites à partir de corps façonnés minéraux et de couches moussées en polyuréthane, **caractérisé en ce que** le corps composite est réalisé et façonné en un cycle de travail, **caractérisé par** les étapes de procédé essentielles suivantes

- introduction du corps façonné minéral dans le moule
- introduction de la composition, contenant

  des polyisocyanates, des polyols,
  des acides gras à longue chaîne comprenant 6 à 30 atomes de carbone et des amines, choisies parmi la diéthylènetriamine et ses homologues à plus longue chaîne, comprenant au moins deux groupes amino par molécule, les polyamines à fonctionnalité hydroxy, la pipérazine, les pipérazines substituées par aminoalkyle, les pipérazines substituées par hydroxyalkyle, avec un rapport de mélange molaire d'acides gras à amine(s) de 1:3 à 3:1,
  de l'eau ainsi que
  le cas échéant de charges minérales
  dans le moule,

- fermeture du moule,
- le moule n'étant pas préchauffé et
- n'étant soumis qu'à la pression propre qui se forme lors du processus de moussage du mélange de polyuréthane et
- ouverture du moule et prélèvement du corps composite.

**5.** Procédé selon la revendication 4, **caractérisé en ce qu'**on applique une couche d'adhésif sur le corps façonné minéral, avant l'introduction de la composition de polyuréthane apte au moussage.

**6.** Procédé selon la revendication 4 ou 5, **caractérisé en ce qu'**on applique, avant l'application de la composition de mousse sur la couche d'adhésif, une natte de renforcement ou un non-tissé de renforcement.

**7.** Procédé selon au moins l'une quelconque des revendications précédentes, **caractérisé en ce que** le côté du corps moussé opposé à la couche minérale est pourvu d'une natte de renforcement ou d'un non-tissé de renforcement.

**8.** Procédé selon au moins l'une quelconque des revendications précédentes, **caractérisé en ce qu'**on utilise comme composition de type mousse un liant à base de polyuréthane, chargé, les charges étant choisies parmi le carbonate de calcium sous forme de craie ou de poussière de calcaire, le carbonate de calcium et de magnésium, le sulfate de baryum, l'oxyde d'aluminium, l'oxyde d'aluminium hydraté, le sable à quartz, les poussières séchées de meulage de pierre, le verre broyé, le granulat de verre moussé, les copeaux de bois, la farine de bois, les fibres de cellulose, les déchets de mousse, la farine de caoutchouc ou les rognures de caoutchouc ou les mélanges de ceux-ci.

**9.** Procédé selon au moins l'une quelconque des revendications précédentes, **caractérisé en ce que** le liant à base de polyuréthane est constitué par des polyisocyanates, des polyols, des catalyseurs, des acides carboxyliques, 0 à 5% en poids d'eau (par rapport au liant), des amines, des stabilisateurs de mousse ainsi que des agents mouillants et des dispersants.

**10.** Procédé selon au moins l'une quelconque des revendications précédentes, **caractérisé en ce que** la répartition granulométrique des charges correspond à une répartition selon Fuller ou une granulométrie avec une lacune.

**11.** Corps façonné composite réalisé selon un procédé selon les revendications 1 à 10.

**12.** Utilisation des corps composites selon la revendication 11 comme dessus de table, plans de travail pour mobilier de cuisine, plaques pour plancher de bâtiments (le cas échéant avec façonnage dans la couche de mousse pour les tuyaux de chauffage par le sol), plaques pour terrasse, appuis de fenêtre, plaques pour le revêtement de bâtiments ou dalles de trottoir.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19726502 C
- DE 19918459 A
- WO 9612759 A2
- DE 3318596 A
- EP 237959 A